# EUROPÄISCHE PATENTANMELDUNG

(11) **EP 3 466 592 A1**
(43) Veröffentlichungstag der Anmeldung: **10.04.2019**
(21) Anmeldenummer: 17195456.3
(22) Anmeldetag: 09.10.2017
(51) Int. Cl.: B23K 9/20, B23K 35/02

(54) **SCHWEISSBOLZEN UND SCHWEISSPISTOLE**

(71) Anmelder: HILTI Aktiengesellschaft, 9494 Schaan (LI)
(72) Erfinder: Stahel, Simon, 7000 Chur (CH); Popp, Uwe, 9443 Widnau (CH); Rosenbaum, Ulrich, 7323 Wangs (CH)
(74) Vertreter: Hilti Aktiengesellschaft Corporate Intellectual Property

(57) **Zusammenfassung**

Schweissbolzen und Schweisspistole für die Befestigung eines Anbindungselements an einem Untergrund. Der Schweissbolzen hat einen Schaft (240), der mit einem Anbindungsmittel (250) versehen ist, einen Schweissbereich (260) und ein Haltemittel (270), welches mit einer Haltevorrichtung (280) der Schweisspistole zum Halten des Schweissbolzens während des Schweissvorgangs in Eingriff bringbar ist, wobei das Haltemittel (270) in der Längsrichtung zwischen dem Schweissbereich (260) und dem Anbindungsmittel (250) angeordnet ist, so dass das Anbindungsmittel in einer Aufnahme der Schweisspistole aufgenommen ist.

## Beschreibung

### Technisches Gebiet

Die Erfindung betrifft allgemein eine Vorrichtung und ein Verfahren zur Befestigung eines Bolzens an einem Untergrund sowie einen derartigen Bolzen.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Dazu wird der Bolzen von einem elektrisch leitfähigen Bolzenhalter gehalten.

Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der elektrische Strom abgeschaltet und der Bolzen in das verflüssigte Material eingetaucht, während dieses Material erkaltet und fest wird. Der Bolzen ist dann stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

### Darstellung der Erfindung

Aufgabe der Erfindung ist es, eine Vorrichtung und/oder ein Verfahren zur Verfügung zu stellen, mit welchem eine Befestigung eines Bolzens an einem Untergrund vereinfacht und/oder verbessert wird.

Diese Aufgabe ist bei einem Schweissbolzen für die Befestigung eines Anbindungselements an einem Untergrund, mit einem eine Längsrichtung definierenden Schaft, der mit einem Anbindungsmittel versehen ist, mit einem stirnseitigen Schweissbereich, der dafür vorgesehen ist, während eines Schweissvorgangs verflüssigt zu werden, und mit einem Haltemittel, welches mit einer Haltevorrichtung zum Halten des Schweissbolzens während des Schweissvorgangs in Eingriff bringbar ist, dadurch gelöst, dass das Haltemittel in der Längsrichtung zwischen dem Schweissbereich und dem Anbindungsmittel angeordnet ist. Dadurch wird einerseits das Anbindungsmittel vor einer Beschädigung durch die Haltevorrichtung geschützt und andererseits sichergestellt, dass die Haltevorrichtung den Schweissbolzen unabhängig vor einer Länge seines Schaftes in der gewünschten Position hält.

Eine vorteilhafte Ausführungsform ist dadurch gekennzeichnet, dass das Haltemittel einen Vorsprung und/oder eine Vertiefung aufweist. Bevorzugt ist der Vorsprung beziehungsweise die Vertiefung umlaufend an dem Schweissbolzen ausgebildet.

Eine weitere Ausführungsform ist dadurch gekennzeichnet, dass der Schweissbereich und/oder das Haltemittel kreisförmig ist.

Eine weitere vorteilhafte Ausführungsform ist dadurch gekennzeichnet, dass das Anbindungsmittel ein Gewinde für ein Festschrauben des Anbindungselements an dem Schweissbolzen aufweist.

Die Aufgabe ist weiterhin gelöst bei einer Schweisspistole zur Verschweissung von Schweissbolzen mit einem Untergrund, mit einer Haltevorrichtung, welche an einem vorderen Ende der Schweisspistole angeordnet und zum Halten eines Schweissbolzens während eines Schweissvorgangs mit einem Haltemittel des Schweissbolzens in Eingriff bringbar ist, so dass der Schweissbolzen nach vorne auf den Untergrund zu bewegt wird, und mit einer Aufnahme für ein Anbindungsmittel des Schweissbolzens, welche hinter der Haltevorrichtung angeordnet ist.

Die Aufgabe ist weiterhin gelöst bei einem Befestigungssystem, umfassend mindestens einen ersten Schweissbolzen, der nach einem der vorhergehenden Ansprüche ausgebildet ist, und einen zweiten Schweissbolzen, der nach einem der vorhergehenden Ansprüche ausgebildet ist, wobei sich das Anbindungsmittel des ersten Schweissbolzens von dem Anbindungsmittel des zweiten Schweissbolzens unterscheidet, und wobei das Haltemittel des ersten Schweissbolzens mit derselben Haltevorrichtung in Eingriff bringbar ist wie das Haltemittel des zweiten Schweissbolzens.

Eine vorteilhafte Ausführungsform ist dadurch gekennzeichnet, dass das Haltemittel des ersten Schweissbolzens in Form und Abmessungen gleich ist wie das Haltemittel des zweiten Schweissbolzens.

Eine weitere vorteilhafte Ausführungsform ist dadurch gekennzeichnet, dass sich das Anbindungsmittel des ersten Schweissbolzens von dem Anbindungsmittel des zweiten Schweissbolzens in seinen Abmessungen unterscheidet.

Bevorzugt unterscheidet sich das Anbindungsmittel des ersten Schweissbolzens von dem Anbindungsmittel des zweiten Schweissbolzens in seiner Länge entlang der Längsrichtung, in seinem Durchmesser quer zur Längsrichtung und/oder in seiner Form.

Eine weitere vorteilhafte Ausführungsform ist dadurch gekennzeichnet, dass der Schweissbereich des ersten Schweissbolzens in Form und Abmessungen gleich ist wie der Schweissbereich des zweiten Schweissbolzens.

Eine weitere vorteilhafte Ausführungsform ist dadurch gekennzeichnet, dass das Befestigungssystem eine Schweisspistole umfasst, wobei die Haltevorrichtung der Schweisspistole mit dem Haltemittel des ersten Schweissbolzens in Eingriff bringbar ist, so dass das Anbindungsmittel des ersten Schweissbolzens in der Aufnahme aufgenommen ist, und wobei die Haltevorrichtung der Schweisspistole mit dem Haltemittel des zweiten Schweissbolzens in Eingriff bringbar ist, so dass das Anbindungsmittel des zweiten Schweissbolzens in der Aufnahme aufgenommen ist.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung,
- Fig. 2: eine Schweissanordnung in einer teilweisen Längsschnittsansicht,
- Fig. 3: eine Schweissanordnung in einer teilweisen Längsschnittsansicht und
- Fig. 4: ein Befestigungssystem.

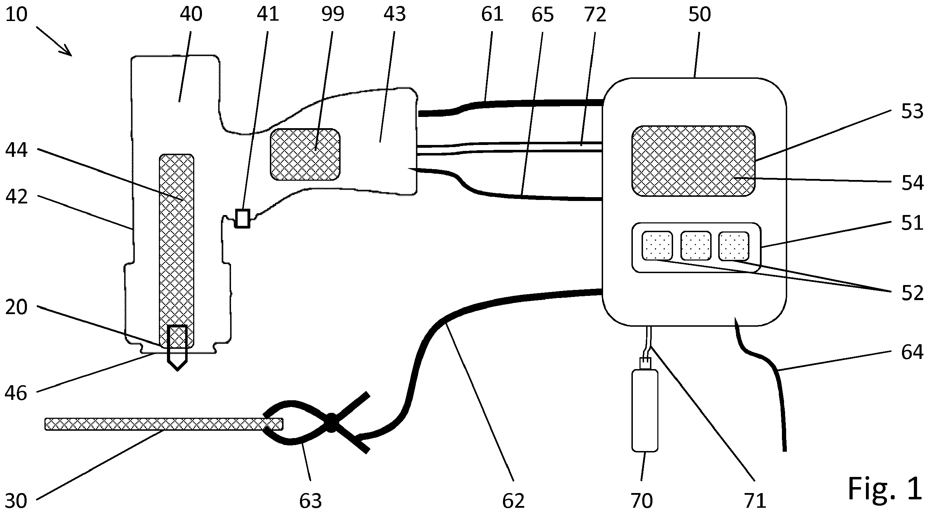

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

Die Schweisspistole 40 weist ein Gehäuse 42 mit einer Mündung 46 auf, von welchem ein Handgriff 43 mit dem Auslöseschalter 41 abragt. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 99 zum Steuern der verschiedenen Komponenten und Einrichtungen der Schweisspistole und des Schweissgeräts 50 auf. Die Steuereinrichtung 99 ist zum Steuern eines oder mehrerer Parameter des Schweissvorgangs vorgesehen. Die Steuereinrichtung 99 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung auf, welche den Bolzenhalter 44 mit einer Kraft von der Mündung 46 weg nach hinten (in Fig. 1 nach oben) beaufschlagt, wenn die Bolzenabhubeinrichtung aktiviert ist. Über eine nicht gezeigte Signalleitung kommuniziert die Steuereinrichtung 99 mit der Bolzenabhubeinrichtung, um die Bolzenabhubeinrichtung zu steuern, insbesondere zu aktivieren und zu deaktivieren.

Die Schweisspistole 40 weist ferner eine als Federelement oder als ein zweiter Hubmagnet ausgebildete Bolzeneintaucheinrichtung auf, welche den Bolzenhalter 44 mit einer Kraft zu der Mündung 46 hin nach vorne (in Fig. 1 nach unten) beaufschlagt, wenn die Bolzeneintaucheinrichtung aktiviert ist. Über eine nicht gezeigte Signalleitung kommuniziert die Steuereinrichtung 99 mit der Bolzeneintaucheinrichtung, um die Bolzeneintaucheinrichtung zu steuern, insbesondere zu aktivieren und zu deaktivieren. Wenn die Bolzeneintaucheinrichtung als ein Federelement ausgebildet ist, wird dieses Federelement vorzugsweise gespannt, wenn der Bolzenhalter von der Bolzenabhubeinrichtung nach hinten bewegt wird, so dass das Federelement den Bolzenhalter nach vorne bewegt, sobald die Bolzenabhubeinrichtung deaktiviert wird.

Bei einem Schweissverfahren mit der Schweissvorrichtung 10 werden zunächst der Untergrund 30 und der Bolzen 20 zur Verfügung gestellt. In einem weiteren Schritt werden von einem Anwender über die Eingabeeinrichtung Informationen eingegeben, beispielsweise über gewünschte Parameter des folgenden Schweissvorgangs. In einem weiteren Schritt wird der Schweissbolzen 20 von dem Schweissgerät 50 mittels des ersten Kabels 61 und des zweiten Kabels 62 mit einem Schweissstrom zwischen dem Schweissbolzen 20 und dem Untergrund 30 beaufschlagt. In einem weiteren Schritt wird der Schweissbolzen 20 mittels der Bolzenabhubeinrichtung von dem Untergrund unter Beibehaltung des zwischen dem Schweissbolzen 20 und dem Untergrund 30 fliessenden Schweissstroms abgehoben, wobei sich zwischen dem Schweissbolzen 20 und dem Untergrund 30 ein Lichtbogen ausbildet. Insbesondere aufgrund der von dem Lichtbogen erzeugten Hitze wird dann ein Material des Schweissbolzens 20 und/oder des Untergrunds 30 teilweise verflüssigt. In einem weiteren Schritt wird der Schweissbolzen 20 mittels der Bolzeneintaucheinrichtung in das verflüssigte Material des Schweissbolzens 20 beziehungsweise des Untergrunds 30 eingetaucht. Danach erstarrt das verflüssigte Material des Schweissbolzens 20 beziehungsweise des Untergrunds 30, so dass der Schweissbolzen 20 stoffschlüssig mit dem Untergrund 30 verbunden ist.

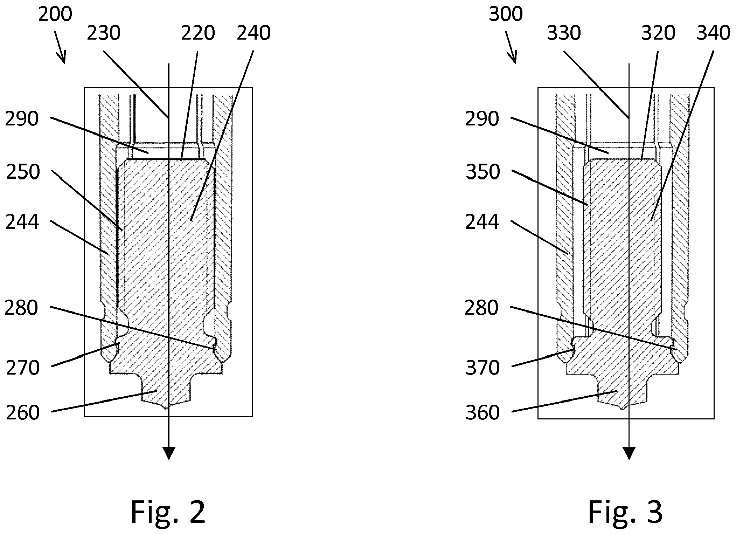

In Fig. 2 ist eine Schweissanordnung 200 mit einem Schweissbolzen 220 und einem Bolzenhalter 244 dargestellt. Der Schweissbolzen 220 weist einen eine Längsrichtung 230 definierenden Schaft 240, der mit einem als Aussengewinde ausgebildeten Anbindungsmittel 250 versehen ist, einen stirnseitigen Schweissbereich 260, der dafür vorgesehen ist, während eines Schweissvorgangs verflüssigt zu werden und ein als kreisförmig umlaufende Vertiefung, vorzugsweise Rille, ausgebildeten Haltemittel 270, welches in der Längsrichtung 230 zwischen dem Schweissbereich 260 und dem Anbindungsmittel 250 angeordnet ist. Der Bolzenhalter 244 weist eine als kreisförmig umlaufender Vorsprung ausgebildete Haltevorrichtung 280 auf, mit welcher das Haltemittel 270 im Eingriff ist, um den Schweissbolzen 220 während eines Schweissvorgangs, beispielsweise mit der Schweissvorrichtung 10 (Fig. 1), zu halten.

Der Bolzenhalter 244 ist Teil einer nicht näher gezeigten Schweisspistole zur Verschweissung des Schweissbolzens 220 mit einem Untergrund, welche beispielsweise wie die Schweisspistole 40 (Fig. 1) ausgebildet ist. Die Haltevorrichtung 280 ist an einem vorderen Ende der Schweisspistole angeordnet, so dass der Schweissbolzen 220 nach vorne auf den Untergrund zu bewegt wird, wenn der Bolzenhalter 244 beispielsweise von einer Bolzeneintaucheinrichtung nach vorne bewegt wird. Die Schweisspistole, insbesondere der Bolzenhalter 244, weist hinter der Haltevorrichtung 280 eine im Wesentlichen als Hohlraum ausgebildete Aufnahme 290 für das Anbindungsmittel 250 des Schweissbolzens auf.

Durch diese Anordnung wird einerseits das Anbindungsmittel 250 vor einer Beschädigung durch die Haltevorrichtung 280 geschützt und andererseits sichergestellt, dass die Haltevorrichtung 280 den Schweissbolzen unabhängig vor einer Länge seines Schaftes 240 und/oder des Anbindungsmittels 250 in der gewünschten Position hält. Darüber hinaus ist es möglich, einen einzigen Bolzenhalter für Schweissbolzen mit unterschiedlichen, insbesondere unterschiedlich grossen, Anbindungsmitteln zu verwenden.

In Fig. 3 ist eine zweite Schweissanordnung 300 mit einem zweiten Schweissbolzen 320 und dem Bolzenhalter 244 aus Fig. 2 dargestellt. Der zweite Schweissbolzen 320 weist ebenfalls einen eine Längsrichtung 330 definierenden Schaft 340, der mit einem als Aussengewinde ausgebildeten Anbindungsmittel 350 versehen ist, einen stirnseitigen Schweissbereich 360, der dafür vorgesehen ist, während eines Schweissvorgangs verflüssigt zu werden und ein als kreisförmig umlaufende Vertiefung ausgebildetes zweites Haltemittel 370 auf, welches in der Längsrichtung 330 zwischen dem Schweissbereich 360 und dem Anbindungsmittel 350 angeordnet ist und die gleiche Form sowie die gleichen Abmessungen hat wie das Haltemittel 270 des in Fig. 2 gezeigten Schweissbolzens 220.

Das Anbindungsmittel 350 des Schweissbolzens 320 hat einen kleineren Durchmesser als das Anbindungsmittel 250 des Schweissbolzens 220 und wird daher ebenfalls in der Aufnahme 290 aufgenommen, wenn der Schweissbolzen 350 von der mit dem Haltemittel 370 in Eingriff befindlichen Haltevorrichtung 280 gehalten ist. Der Schweissbolzen 220 und der zweite Schweissbolzen 320 sind somit Teil eines Befestigungssystems gemäss dieser Anmeldung. Der Schweissbereich 260 des Schweissbolzens 220 ist dabei in Form und Abmessungen gleich wie der Schweissbereich 360 des zweiten Schweissbolzens 320. Dadurch ist es möglich, Schweissbolzen mit unterschiedlichen, insbesondere unterschiedlich grossen Anbindungsmitteln mit denselben Schweissparametern wie Schweissstromstärke, elektrische Spannung, Schweissstromdauer und dergleichen, an den Untergrund zu schweissen.

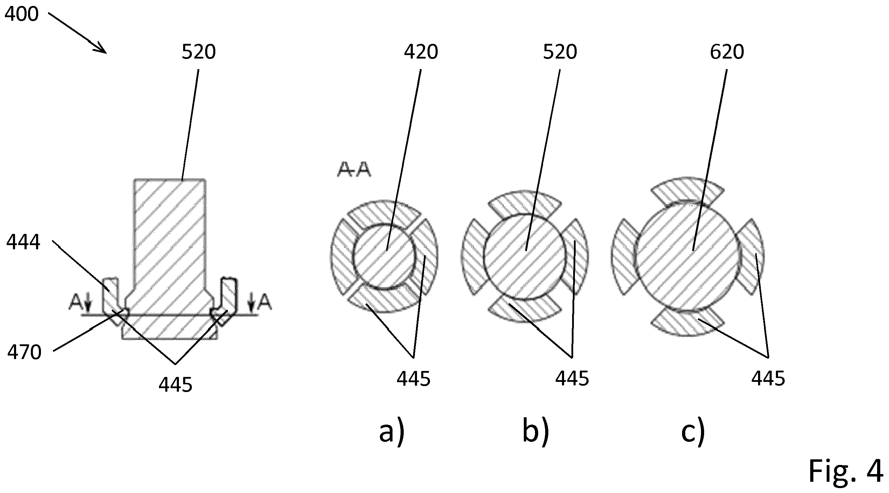

In Fig. 4 ist ein Schweisssystem 400 dargestellt, bei dem ein erster Schweissbolzen 420, ein zweiter Schweissbolzen 520 und ein dritter Schweissbolzen 620 Haltemittel mit unterschiedlichen Durchmessern aufweisen. In Fig. 4 ganz links ist gezeigt, dass der Schnitt A-A gemäss Fig. 4a bis 4c durch das Haltemittel 470 des jeweiligen Schweissbolzens 420, 520, 620 verläuft. Der in Fig. 4a) gezeigte Schweissbolzen 420 weist ein Haltemittel mit einem kleinen Durchmesser auf, der in Fig. 4b) gezeigte Schweissbolzen 520 weist ein Haltemittel mit einem mittleren Durchmesser auf und der in Fig. 4c) gezeigte Schweissbolzen 620 weist ein Haltemittel mit einem grossen Durchmesser auf.

Das Schweisssystem 400 weist einen Bolzenhalter 444 mit vier Federarmen 445 auf, zwischen denen jeder der Schweissbolzen 420, 520, 620 von der Haltevorrichtung 480 gehalten ist. Die vier Federarme 445 spreizen sich dafür entsprechend auseinander und klemmen den jeweiligen Schweissbolzen 420, 520, 620 aufgrund ihrer federnden Eigenschaft zwischen sich ein, wobei sie insbesondere in das Haltemittel einrasten. Bei nicht gezeigten Ausführungsbeispielen weist der Bolzenhalter zwei, drei, fünf, sechs oder mehr derartige Federarme auf.

Bevorzugt dient die Haltevorrichtung des Bolzenhalters auch als Schweissstrom-Kontaktelement, so dass ein stabiler Schweissstrom bei verschiedenen Bolzengrössen sichergestellt ist. Ausserdem wird unter Umständen ein Verschleiss des Bolzenhalters reduziert.

Die Erfindung wurde anhand von Beispielen einer Vorrichtung zur Befestigung eines ersten Gegenstandes an einem zweiten Gegenstand sowie einem Herstellungsverfahren für eine solche Vorrichtung beschrieben. Die Merkmale der beschriebenen Ausführungsformen sind dabei auch beliebig miteinander innerhalb einer einzigen Befestigungsvorrichtung beziehungsweise eines einzigen Herstellungsverfahrens kombinierbar. Es wird darauf hingewiesen, dass die erfindungsgemässe Vorrichtung und das erfindungsgemässe Verfahren auch für andere Zwecke geeignet sind.

## Patentansprüche

1. Schweissbolzen für die Befestigung eines Anbindungselements an einem Untergrund, mit einem eine Längsrichtung definierenden Schaft, der mit einem Anbindungsmittel versehen ist, mit einem stirnseitigen Schweissbereich, der dafür vorgesehen ist, während eines Schweissvorgangs verflüssigt zu werden, und mit einem Haltemittel, welches mit einer Haltevorrichtung zum Halten des Schweissbolzens während des Schweissvorgangs in Eingriff bringbar ist, **dadurch gekennzeichnet, dass** das Haltemittel in der Längsrichtung zwischen dem Schweissbereich und dem Anbindungsmittel angeordnet ist.

2. Schweissbolzen nach Anspruch 1, wobei das Haltemittel einen Vorsprung und/oder eine Vertiefung aufweist.

3. Schweissbolzen nach Anspruch 2, wobei der Vorsprung beziehungsweise die Vertiefung umlaufend an dem Schweissbolzen ausgebildet ist.

4. Schweissbolzen nach einem der vorhergehenden Ansprüche, wobei der Schweissbereich und/oder das Haltemittel kreisförmig ist.

5. Schweissbolzen nach einem der vorhergehenden Ansprüche, wobei das Anbindungsmittel ein Gewinde für ein Festschrauben des Anbindungselements an dem Schweissbolzen aufweist.

6. Schweisspistole zur Verschweissung von Schweissbolzen mit einem Untergrund, mit einer Haltevorrichtung, welche an einem vorderen Ende der Schweisspistole angeordnet und zum Halten eines Schweissbolzens während eines Schweissvorgangs mit einem Haltemittel des Schweissbolzens in Eingriff bringbar ist, so dass der Schweissbolzen nach vorne auf den Untergrund zu bewegt wird, und mit einer Aufnahme für ein Anbindungsmittel des Schweissbolzens, welche hinter der Haltevorrichtung angeordnet ist.

7. Befestigungssystem, umfassend mindestens einen ersten Schweissbolzen, der nach einem der vorhergehenden Ansprüche ausgebildet ist, und einen zweiten Schweissbolzen, der nach einem der vorhergehenden Ansprüche ausgebildet ist, wobei sich das Anbindungsmittel des ersten Schweissbolzens von dem Anbindungsmittel des zweiten Schweissbolzens unterscheidet, und wobei das Haltemittel des ersten Schweissbolzens mit derselben Haltevorrichtung in Eingriff bringbar ist wie das Haltemittel des zweiten Schweissbolzens.

8. Befestigungssystem nach Anspruch 7, wobei das Haltemittel des ersten Schweissbolzens in Form und Abmessungen gleich ist wie das Haltemittel des zweiten Schweissbolzens.

9. Befestigungssystem nach einem der Ansprüche 7 bis 8, wobei sich das Anbindungsmittel des ersten Schweissbolzens von dem Anbindungsmittel des zweiten Schweissbolzens in seinen Abmessungen unterscheidet.

10. Befestigungssystem nach Anspruch 9, wobei sich das Anbindungsmittel des ersten Schweissbolzens von dem Anbindungsmittel des zweiten Schweissbolzens in seiner Länge entlang der Längsrichtung unterscheidet.

11. Befestigungssystem nach Anspruch 9 oder 10, wobei sich das Anbindungsmittel des ersten Schweissbolzens von dem Anbindungsmittel des zweiten Schweissbolzens in seinem Durchmesser quer zur Längsrichtung unterscheidet.

12. Befestigungssystem nach einem der Ansprüche 7 bis 11, wobei sich das Anbindungsmittel des ersten Schweissbolzens von dem Anbindungsmittel des zweiten Schweissbolzens in seiner Form unterscheidet.

13. Befestigungssystem nach einem der Ansprüche 7 bis 12, wobei der Schweissbereich des ersten Schweissbolzens in Form und Abmessungen gleich ist wie der Schweissbereich des zweiten Schweissbolzens.

14. Befestigungssystem nach einem der Ansprüche 7 bis 13, weiterhin umfassend eine Schweisspistole nach Anspruch 6, wobei die Haltevorrichtung der Schweisspistole mit dem Haltemittel des ersten Schweissbolzens in Eingriff bringbar ist, so dass das Anbindungsmittel des ersten Schweissbolzens in der Aufnahme aufgenommen ist, und wobei die Haltevorrichtung der Schweisspistole mit dem Haltemittel des zweiten Schweissbolzens in Eingriff bringbar ist, so dass das Anbindungsmittel des zweiten Schweissbolzens in der Aufnahme aufgenommen ist.
